# EUROPEAN PATENT APPLICATION

(11) **EP 3 702 697 A1**
(43) Date of publication of application: **02.09.2020**
(21) Application number: 17930121.3
(22) Date of filing: 25.10.2017
(51) Int. Cl.: F25B 41/00

(54) **REFRIGERATION CYCLE DEVICE UNIT, AND REFRIGERATION CYCLE DEVICE AND ELECTRICAL EQUIPMENT**

(71) Applicant: Mitsubishi Electric Corporation, Chiyoda-ku Tokyo 100-8310 (JP)
(72) Inventor: FUJIWARA, Susumu, Tokyo 1008310 (JP); SATO, Kosuke, Tokyo 1008310 (JP)
(74) Representative: Pfenning, Meinig & Partner mbB
(86) International application number: PCT/JP2017/038503
(87) International publication number: WO 2019/082300

(57) **Abstract**

A unit for a refrigeration cycle device includes a housing that internally includes a sound field space surrounded by surfaces each reflecting sound waves, an expansion device disposed in the sound field space and configured to adjust a flow rate of refrigerant, a refrigerant pipe disposed in the sound field space and connected to the expansion device, and a sound absorber disposed on at least a part of the surfaces defining the sound field space.

## Description

### Technical Field

The present disclosure relates to a unit for a refrigeration cycle device that includes a space in which an expansion device and a refrigerant pipe connected to the expansion device are accommodated, a refrigeration cycle device including the unit for a refrigeration cycle device, and an electric apparatus including the refrigeration cycle device.

### Background Art

An expansion device that is one component of a refrigeration cycle device is commonly mounted together with a refrigerant pipe connected to the expansion device, on a unit for a refrigeration cycle device such as a heat source side unit and a use side unit. Accordingly, the unit for a refrigeration cycle device includes a space in which the expansion device and the refrigerant pipe connected to the expansion device are accommodated. The space is unsealed and open.

In the refrigeration cycle device, refrigerant inside the refrigerant pipe makes a transition to any of three states of a gas phase state, a liquid phase state, and a two-phase gas-liquid state depending on an operation state. Further, different refrigerant noise is generated in each of the phase states of the refrigerant. In any of the phase states, the refrigerant noise is generated in particular when the refrigerant passes through an electronic expansion valve that is the expansion device. In the following, the electronic expansion valve is referred to as a LEV.

More specifically, a fluid vibration phenomenon different from a vibration phenomenon caused by a flow of the refrigerant and noise caused by the fluid vibration phenomenon occur because of collision of the refrigerant with a wall surface inside the LEV and disturbance of the flow of the refrigerant at a corner of a valve body that is a part of components of the LEV. Further, standing waves generated in a structure space inside the LEV and in a structure space inside the refrigerant pipe, the flow of the refrigerant itself, a turbulent component caused by disturbance of the refrigerant flow, and sound waves derived from excited noise caused by collision inside the LEV and inside the refrigerant pipe are combined to cause large noise.

For such a reason, for example, in Patent Literature 1, a resonance space is provided close to the LEV to reduce the refrigerant noise inside the refrigerant pipe. According to Patent Literature 1, it is possible to adjust a position of an antinode of a resonance mode. This adjustment makes it possible to lower an amplitude level of the resonance sound and to reduce noise. In other words, in Patent Literature 1, the refrigerant noise is amplified by resonance in an internal space of the LEV when the refrigerant passes through the LEV, and a resonance adjuster that includes a resonance space as measures against the amplification of the refrigerant noise is provided to the LEV.

Further, in some technology, a rubber vibration insulator is attached to the refrigerant pipe connected to the LEV, to take measures against vibration.

In Patent Literature 2, a shape of an opening port through which the refrigerant flows, inside the LEV is devised to effectively disperse the flow of the refrigerant. This dispersion reduces fluid energy to reduce the refrigerant noise.

Further, in Patent Literature 3, to prevent noise from an expansion mechanism such as a LEV, a strainer, and a silencer from radiating to outside of a product, the expansion mechanism is covered with a sound reducing plate.

### Citation List

### Patent Literature

Patent Literature 1: Japanese Patent No. 4079177
Patent Literature 2: Japanese Patent No. 5881845
Patent Literature 3: Japanese Unexamined Patent Application Publication No. 9-280597

### Summary of Invention

### Technical Problem

In the technology disclosed in Patent Literature 1, the refrigerant noise cannot be reduced by the measures against vibration as the refrigerant noise involves acoustic radiation by transmitted noise phenomenon from the inside of the refrigerant pipe caused by a coincidence phenomenon of the refrigerant pipe. The coincidence phenomenon is a phenomenon in which, when a sound wave of a certain frequency enters a rigid material, flexural vibration of the rigid material and vibration of the sound wave that enter are coincident with each other to cause a resonance state.

The measures against the refrigerant noise by the structure disclosed in Patent Literature 2 or Patent Literature 3 achieve the reduction effect to the vibration noise and the refrigerant noise caused by the structure but cannot achieve the reduction effect of the sound pressure level to all of the refrigerant noise generated depending on a flow rate of the refrigerant varying with time.

Further, as the types of the refrigerant noise, there are vibration noise propagating through the inside of the refrigerant pipe and the noise by space resonance including compressional waves of the noise at a constant period, in addition to the noise caused by flow of the refrigerant inside the refrigerant pipe. In addition, these noises are amplified at some positions. For the reasons, it is difficult to reduce all of the refrigerant noise phenomenon only by the structure of the refrigerant pipe or the resonance pipe connected to the LEV. Further, in addition to the vibration, it is difficult to cope with the transmitted noise transmitted from the refrigerant pipe to the outside.

The present disclosure is made in consideration of the above-described issues, and relates to a unit for a refrigeration cycle device, a refrigeration cycle device, and an electric apparatus that each make it possible to prevent vibration noise radiated from a refrigerant pipe, transmitted noise transmitted from the inside to the outside of the refrigerant pipe, and other sound from leaking as noise to the outside. Solution to Problem

A unit for a refrigeration cycle device according to an embodiment of the present disclosure includes a housing that internally includes a sound field space surrounded by surfaces each reflecting sound waves, an expansion device disposed in the sound field space and configured to adjust a flow rate of refrigerant, a refrigerant pipe disposed in the sound field space and connected to the expansion device, and a sound absorber disposed on at least a part of the surfaces defining the sound field space.

### Advantageous Effects of Invention

In the unit for a refrigeration cycle device according to an embodiment of the present disclosure, the sound absorber is disposed on at least a part of the surfaces defining the sound field space. Therefore, the standing wave component in the sound field space are reduced, and it is thus possible to prevent noise from leaking to the outside of the sound field space.

### Brief Description of Drawings

[Fig. 1] Fig. 1 is an explanatory diagram to explain frequency characteristics of refrigerant noise generated from a refrigeration cycle device.
[Fig. 2] Fig. 2 is a schematic configuration diagram illustrating an exemplary configuration of a refrigerant circuit of a refrigeration cycle device according to an embodiment of the present disclosure.
[Fig. 3] Fig. 3 is a schematic configuration diagram schematically illustrating an internal configuration example of a load side unit as viewed from a front, according to the embodiment of the present disclosure.
[Fig. 4] Fig. 4 is a schematic cross-sectional view schematically illustrating a cross-section taken along line A-A in Fig. 3.
[Fig. 5] Fig. 5 is an explanatory diagram to explain "standing waves" present in an acoustic space.
[Fig. 6] Fig. 6 is an explanatory diagram to explain "standing waves in vertical direction" present in an acoustic space defined in a housing of a common load side unit.
[Fig. 7] Fig. 7 is an explanatory diagram to explain "standing waves in front-rear direction" present in the acoustic space defined in the housing of the common load side unit.
[Fig. 8] Fig. 8 is an explanatory diagram to explain "standing waves in right-left direction" present in the acoustic space defined in the housing of the common load side unit.
[Fig. 9] Fig. 9 is a schematic cross-sectional view schematically illustrating a configuration example of a load side unit that includes a sound absorber at an upper part of a first space, as viewed from a side.
[Fig. 10] Fig. 10 is a schematic cross-sectional view schematically illustrating a configuration example of a load side unit that includes a sound absorber at a rear surface part of a first space, as viewed from a side.
[Fig. 11] Fig. 11 is a schematic configuration diagram schematically illustrating a configuration example of a load side unit that includes a sound absorber at a side surface part of a first space, as viewed from a front.
[Fig. 12] Fig. 12 is a schematic configuration diagram schematically illustrating a state where the configuration examples of Fig. 9 to Fig. 12 are combined.
[Fig. 13] Fig. 13 is a schematic layout diagram schematically illustrating a layout example of a refrigerant pipe inside a housing of the load side unit according to the embodiment of the present disclosure.
[Fig. 14] Fig. 14 is a schematic configuration diagram schematically illustrating a modification of the load side unit according to the embodiment of the present disclosure.
[Fig. 15] Fig. 15 is an explanatory diagram to explain action in a case where a sound insulator is stacked on a sound absorber and the stacked body is disposed on the refrigerant pipe.
[Fig. 16] Fig. 16 is a schematic cross-sectional view schematically illustrating a cross-sectional configuration in the case where the sound insulator is stacked on the sound absorber and the stacked body is disposed on the refrigerant pipe. Description of Embodiments

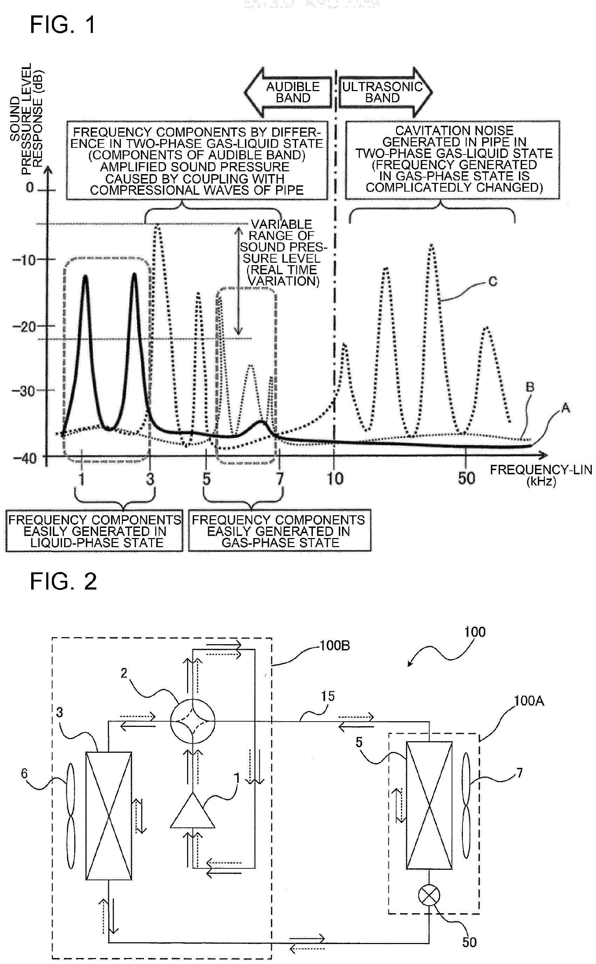

An embodiment of the present disclosure is described below with reference to drawings. Note that, in the following drawings including Fig. 1, size relationship of components may be different from actual size relationship. Further, in the following drawings including Fig. 1, components denoted by the same reference signs are the same or equivalent components, and the reference signs are common in the full text of the specification. Furthermore, forms of the components described in the full text of the specification are merely illustrative, and are not limited to the described forms.

First, frequency characteristics of refrigerant noise generated from a refrigeration cycle device are described. Fig. 1 is an explanatory diagram to explain the frequency characteristics of the refrigerant noise generated from the refrigeration cycle device. Refrigerant flow noise generated from the refrigeration cycle device is described with reference to Fig. 1.

Note that Fig. 1 illustrates, as a graph, an example of the frequency characteristics of the refrigerant noise generated from the refrigeration cycle device commonly used. Further, in Fig. 1, a vertical axis represents a sound pressure level (dB), and a horizontal axis represents a frequency (kHz).

In the refrigeration cycle device, refrigerant inside a refrigerant circuit makes a transition to any of three states of a gas phase state, a two-phase gas-liquid state, and a liquid phase state depending on an operation condition of the refrigeration cycle device. Under the phase conditions, different refrigerant noise is generated. In particular, when the refrigerant passes through the LEV, a fluid vibration phenomenon different from a vibration phenomenon caused by a flow of the refrigerant and noise caused by the fluid vibration phenomenon occur because of collision of the refrigerant with a wall surface inside the LEV and disturbance of the flow of the refrigerant at a corner of a valve body that is a part of components of the LEV.

Furthermore, standing waves generated in a structure space inside the LEV and in a structure space inside a refrigerant pipe, the flow of the refrigerant itself, a turbulent component caused by disturbance of the refrigerant flow, and sound waves derived from excited noise caused by collision inside the LEV and inside the refrigerant pipe are combined to cause large noise.

As illustrated by a line A in Fig. 1, for example, in a case where the refrigerant is in the liquid phase state, a plurality of peak components are generated in a band that ranges from about 1 kHz to 3 kHz. Further, as illustrated by a line B in Fig. 1, in a case where the refrigerant is in the gas phase state, a plurality of peak components are generated in a band of 5 kHz to 7 kHz. Further, as illustrated by a line C in Fig. 1, in a case where the refrigerant is in the two-phase gas-liquid state, a plurality of peak components are generated in a band of 3 kHz to 5 kHz and in an ultrasonic band of 10 kHz or more. In the case where the refrigerant is in the gas phase or in the liquid phase, the above-described peak component is generated as a single peak component in some cases.

In a case where the plurality of peak components are generated, differential noise caused by fluctuation phenomenon and the refrigerant noise that has "chordal" sound quality influenced by the plurality of peak components are also generated. The refrigerant noise caused by such a phenomenon is generated during operation of the refrigeration cycle device. Therefore, even at bedtime at night, the refrigerant noise is generated from an indoor unit installed in an air-conditioned space. This noise gives discomfort to a person sleeping in the air-conditioned space. In the case where the refrigerant is in the two-phase gas-liquid state, the variable refrigerant noise particularly giving discomfort is generated.

The gas-phase component in the two-phase gas-liquid state can be represented as aggregates of bubbles having various dimensional diameters. Further, the bubbles each having an extremely small bubble diameter are micro-class bubbles and can be referred to as microbubbles. Further, pressure inside the refrigerant pipe included in the refrigerant circuit is high to circulate the refrigerant, and acceleration is applied to the refrigerant. When the micro-class bubbles are generated in the refrigerant in the two-phase gas-liquid state flowing at high speed, the bubbles travel in the refrigerant pipes while the bubbles are accelerated by pressure. At this time, the air is squashed inside each of the bubbles.

Such bubbles in the high-pressure state flow into the LEV, collide with the components such as a valve body of the LEV, and are burst. At this time, a cavitation phenomenon occurs, and "sound = noise" called bubble pulse is generated by bubble burst. The noise, namely, the cavitation noise has acoustic characteristics that generate a plurality of peak components in a high frequency band through an ultrasonic band of the frequency higher than or equal to 10 kHz, as illustrated in Fig. 1.

The noise of the ultrasonic band repeatedly varies depending on diameters of the bubbles, collision of the bubbles, and a passage state of the bubbles, and various frequencies are generated. The frequencies are generated as pipe vibration, and the vibration propagates as transmitted noise to the outside of the refrigerant pipe. The transmitted noise that has propagated to the outside of the refrigerant pipe reaches a person as unpleasant noise of the audible band. In other words, the adjacent frequencies of a plurality of ultrasonic waves in the peak state are generated. The peak components of the ultrasonic band are sound waves of a nonlinear region, and are generated as frequency components of difference and summation by a well-known parametric phenomenon between the adjacent frequencies.

Further, the plurality of peak components in the ultrasonic band generate the fluctuation phenomenon, and generate differential noise. The frequency components of the differential noise are generated in the audible frequency band. Therefore, the differential noise is generated from the LEV and the refrigerant pipe connected to the LEV. The differential noise is radiated as sound (noise), and is provided as unpleasant noise to, for example, a sleeping person.

Fig. 2 is a schematic configuration diagram illustrating an exemplary configuration of a refrigerant circuit of a refrigeration cycle device 100 according to the embodiment of the present disclosure.

Fig. 2 illustrates, as an example, a case where the refrigeration cycle device 100 is mounted on an air-conditioning apparatus that is an example of an electric apparatus. Further, in Fig. 2, a flow of the refrigerant during cooling operation is illustrated by solid arrows, and a flow of the refrigerant during heating operation is illustrated by dashed arrows.

### <Configuration of Refrigeration Cycle Device 100>

As illustrated in Fig. 2, the refrigeration cycle device 100 includes a refrigerant circuit in which a compressor 1, a flow switching device 2, a first heat exchanger 3, a LEV 50, and a second heat exchanger 5 are connected by a refrigerant pipe 15.

Fig. 2 illustrates, as an example, the refrigeration cycle device 100 that includes the flow switching device 2 and can switch the cooling operation and the heating operation by the flow switching device 2; however, the flow switching device 2 may not be provided and the flow direction of the refrigerant may be fixed.

The compressor 1, the flow switching device 2, and the first heat exchanger 3 are mounted on a heat source side unit 100B. The heat source side unit 100B is one of units for a refrigeration cycle device. The heat source side unit 100B is installed in a space different from an air-conditioned space, for example, outdoor, and is configured to supply cooling energy or heating energy to a load side unit 100A. Note that the heat source side unit 100B is also referred to as an outdoor unit.

The second heat exchanger 5 and the LEV 50 are mounted on the load side unit 100A. The load side unit 100A is one of the units for a refrigeration cycle device. The load side unit 100A is installed in a space to supply the cooling energy or the heating energy to the air-conditioned space such as a living space, and is configured to cool or heat the air-conditioned space by the cooling energy or the heating energy supplied from the heat source side unit 100B. Note that the load side unit 100A is also referred to as a use side unit or an indoor unit.

The compressor 1 compresses the refrigerant and discharges the compressed refrigerant. Examples of the compressor 1 include a rotary compressor, a scroll compressor, a screw compressor, and a reciprocating compressor. In a case where the first heat exchanger 3 is used as a condenser, the refrigerant discharged from the compressor 1 is fed to the first heat exchanger 3 through the refrigerant pipe 15. In a case where the first heat exchanger 3 is used as an evaporator, the refrigerant discharged from the compressor 1 is fed to the second heat exchanger 5 through the refrigerant pipe 15.

The flow switching device 2 is provided to a discharge port of the compressor 1, and switches the flows of the refrigerant between the heating operation and the cooling operation. Examples of the flow switching device 2 include a four-way valve and a combination of any ones of three-way valves and two-way valves.

The first heat exchanger 3 is used as an evaporator during the heating operation, and is used as a condenser during the cooling operation. Examples of the first heat exchanger 3 include a fin-and-tube heat exchanger.

The first heat exchanger 3 is provided with a first air-sending device 6. The first air-sending device 6 supplies air as heat exchanging fluid to the first heat exchanger 3. Examples of the first air-sending device 6 include a propeller fan including a plurality of blades.

The LEV 50 is an electronic expansion valve that is an example of the expansion device, and decompresses the refrigerant that has passed through the second heat exchanger 5 or the first heat exchanger 3. The case where the LEV 50 is mounted on the load side unit 100A is described here as an example; however, the LEV 50 may be mounted on the heat source side unit 100B. Further, the LEV 50 is described as an example of the expansion device; however, the expansion device is not limited to the LEV 50, and the type of the expansion device is not particularly limited as long as the expansion device includes a valve body that adjusts a flow rate of the refrigerant.

The second heat exchanger 5 is used as a condenser during the heating operation, and is used as an evaporator during the cooling operation. Examples of the second heat exchanger 5 include a fin-and-tube heat exchanger.

The second heat exchanger 5 is provided with a second air-sending device 7. The second air-sending device 7 supplies air as heat exchanging fluid to the second heat exchanger 5. Examples of the second air-sending device 7 include a propeller fan including a plurality of blades.

### <Operation of Refrigeration Cycle Device 100>

Next, operation of the refrigeration cycle device is described together with the flow of the refrigerant. The operation of the refrigeration cycle device 100 in a case where the heat exchanging fluid is air and heat exchanged fluid is the refrigerant is described as an example.

First, the cooling operation performed by the refrigeration cycle device 100 is described.

When the compressor 1 is driven, the refrigerant in a high-temperature high-pressure gas state is discharged from the compressor 1. Subsequently, the refrigerant flows as illustrated by solid arrows. The high-temperature high-pressure gas refrigerant discharged from the compressor 1 flows into the first heat exchanger 3, which is used as a condenser, through the flow switching device 2. In the first heat exchanger 3, heat is exchanged between the flowing-in high-temperature high-pressure gas refrigerant and the air supplied from the first air-sending device 6, and the high-temperature high-pressure gas refrigerant is condensed into high-pressure liquid refrigerant.

The high-pressure liquid refrigerant fed out from the first heat exchanger 3 becomes refrigerant in a two-phase gas-liquid state containing low-pressure gas refrigerant and low-pressure liquid refrigerant through the LEV 50. The two-phase gas-liquid refrigerant flows into the second heat exchanger 5, which is used as an evaporator. In the second heat exchanger 5, heat is exchanged between the flowing-in two-phase gas-liquid refrigerant and the air supplied from the second air-sending device 7, and the liquid refrigerant of the two-phase gas-liquid refrigerant is evaporated into low-pressure gas refrigerant. The air-conditioned space is cooled by the heat exchange. The low-pressure gas refrigerant fed out from the second heat exchanger 5 flows into the compressor 1 through the flow switching device 2, and is compressed into the high-temperature high-pressure gas refrigerant. The high-temperature high-pressure gas refrigerant is again discharged from the compressor 1. Subsequently, this cycle is repeated.

Next, the heating operation performed by the refrigeration cycle device 100 is described.

When the compressor 1 is driven, the refrigerant in the high-temperature high-pressure gas state is discharged from the compressor 1. Subsequently, the refrigerant flows as illustrated by dashed arrows. The high-temperature high-pressure gas refrigerant discharged from the compressor 1 flows into the second heat exchanger 5, which is used as a condenser, through the flow switching device 2. In the second heat exchanger 5, heat is exchanged between the flowing-in high-temperature high-pressure gas refrigerant and the air supplied from the second air-sending device 7, and the high-temperature high-pressure gas refrigerant is condensed into high-pressure liquid refrigerant. The air-conditioned space is heated by the heat exchange.

The high-pressure liquid refrigerant fed out from the second heat exchanger 5 becomes refrigerant in a two-phase gas-liquid state containing low-pressure gas refrigerant and low-pressure liquid refrigerant through the LEV 50. The two-phase gas-liquid refrigerant flows into the first heat exchanger 3, which is used as an evaporator. In the first heat exchanger 3, heat is exchanged between the flowing-in two-phase gas-liquid refrigerant and the air supplied from the first air-sending device 6, and the liquid refrigerant of the two-phase gas-liquid refrigerant is evaporated into low-pressure gas refrigerant. The low-pressure gas refrigerant fed out from the first heat exchanger 3 flows into the compressor 1 through the flow switching device 2, and is compressed into the high-temperature high-pressure gas refrigerant. The high-temperature high-pressure gas refrigerant is again discharged from the compressor 1. Subsequently, this cycle is repeated.

### <Configuration of Load Side Unit 100A>

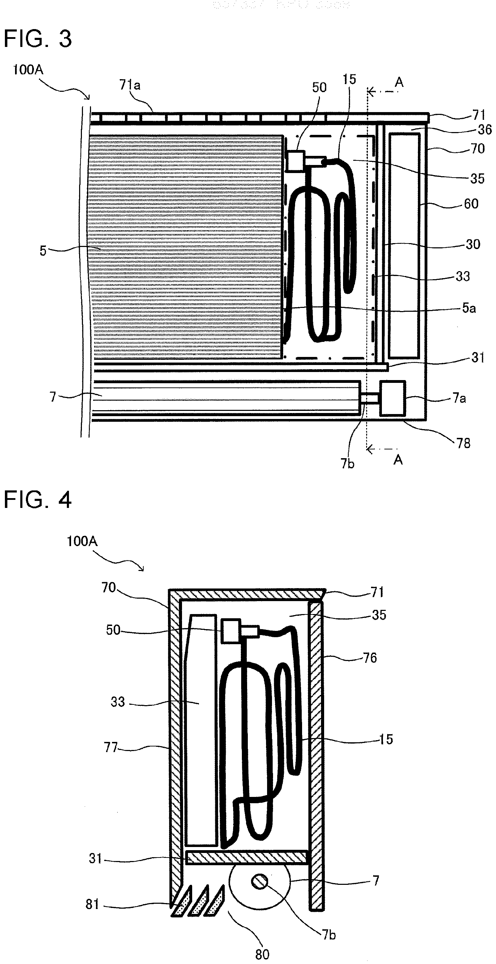

Fig. 3 is a schematic configuration diagram schematically illustrating an internal configuration example of the load side unit 100A as viewed from a front. Fig. 4 is a schematic cross-sectional view schematically illustrating a cross-section taken along line A-A in Fig. 3. The internal configuration of the load side unit 100A, which is one of the units for a refrigeration cycle device according to the embodiment of the present disclosure, is described with reference to Fig. 3 and Fig. 4. Note that Fig. 3 illustrates an inside of the load side unit 100A with a front panel 77 removed from the load side unit 100A. Further, Fig. 3 illustrates a state viewed through a drain cover 33 in such a manner that the LEV 50 and the refrigerant pipe 15 are visually recognizable.

The load side unit 100A includes a housing 70 that forms an outer shell. A front surface of the housing 70 includes the front panel 77, which is attached in such a manner that the front panel 77 may be detached. The front panel 77 is used as a design cover of the load side unit 100A. A top surface of the housing 70 includes a top panel 71 through which an opening port 71a used as an air inlet penetrates. The top panel 71 is used as the design cover of the load side unit 100A, together with the front panel 77. A rear surface of the housing 70 includes a base 76 to be attached to, for example, a wall of the air-conditioned space. Side surfaces of the housing 70 each include a side panel. A bottom surface of the housing 70 includes a bottom panel 78 through which an air outlet 80 penetrates.

Note that a case where the load side unit 100A is of a wall mounted type is described as an example; however, the type is not limited to a wall mounted type, and the load side unit 100A may be of a ceiling concealed type, a ceiling suspended type, or a floor mounted type. In a case where the load side unit 100A is not of the wall mounted type, the rear surface of the housing 70 includes a rear panel.

Further, the side panels may be each a detachable panel separated from the top panel 71 and the bottom panel 78, or may be integrated with the top panel 71 and the bottom panel 78.

Further, a wind direction adjusting unit 81 that adjusts a direction of the air blown out from the air outlet 80 in vertical and right directions is disposed at the air outlet 80.

As illustrated in Fig. 3 and Fig. 4, an inside of the housing 70 is partitioned by a first partition plate 30 and a second partition plate 31. In the internal space of the housing 70 partitioned by the first partition plate 30 and the second partition plate 31, a space in which the second heat exchanger 5, the LEV 50, and the refrigerant pipe 15 are accommodated is referred to as a first space 35. Further, in the internal space of the housing 70 partitioned by the first partition plate 30 and the second partition plate 31, a space in which a controller 60 is accommodated is referred to as a second space 36.

The first partition plate 30 is provided to extend in a vertical direction of a paper surface of Fig. 3. In other words, the first partition plate 30 partitions the internal space of the housing 70 into a right space and a left space on the paper surface. An upper end part of the first partition plate 30 on the paper surface in Fig. 3 abuts on the top panel 71, and a lower end part of the first partition plate 30 on the paper surface in Fig. 3 abuts on the second partition plate 31.

The second partition plate 31 is provided to extend in a right-left direction on the paper surface in Fig. 3. In other words, the second partition plate 31 partitions the internal space of the housing 70 into an upper space and a lower space on the paper surface. A right end part of the second partition plate 31 on the paper surface abuts on the first partition plate 30, and a left end part of the second partition plate 31 on the paper surface abuts on an unillustrated side panel. The second partition plate 31 may also be used as a drain pan provided at a position lower than is the second heat exchanger 5 or may be provided separately from the drain pan.

The second air-sending device 7 is installed in the lower space in Fig. 3 partitioned by the second partition plate 31. Further, a motor 7a that drives the second air-sending device 7 and a shaft 7b that transmits rotation of the motor 7a to the second air-sending device 7 are installed together.

Further, a side surface part 5a of the second heat exchanger 5 includes a metal part to cover a side surface of the second heat exchanger 5.

A drain cover 33 is provided between the front surface and the refrigerant pipe 15. The drain cover 33 is used as a passage compartment that guides moisture generated by the heat exchange in the refrigerant pipe 15 and the second heat exchanger 5, to the drain pan that is disposed at a position lower than is the second heat exchanger 5.

The refrigerant flows through the refrigerant pipe 15. Depending on the operation condition, the refrigerant is in the liquid phase state, the gas phase state, or the two-phase gas-liquid state. As illustrated in Fig. 3, the refrigerant pipe 15 accommodated in the housing 70 is often disposed to be located between the second heat exchanger 5 and the controller 60. The first partition plate 30 is disposed between the refrigerant pipe 15 and the controller 60. The first partition plate 30 is configured to prevent spread of fire to the first space 35 when the controller 60 fires. Accordingly, an area toward the controller 60 from the refrigerant pipe 15 is in a plane state by the first partition plate 30.

The side surface part 5a of the second heat exchanger 5 is in a plane state by a metal part. Further, an area toward the front surface from the refrigerant pipe 15 is in a plane state by the drain cover 33. An area toward the rear surface from the refrigerant pipe 15 is also in a plane state as the rear surface of the housing 70 includes the base 76 or the rear panel. In addition, an area toward an upper surface from the refrigerant pipe 15 is also in a plane state as the upper surface includes the top panel 71.

In other words, the refrigerant pipe 15 accommodated in the housing 70 is inevitably covered with the planes on front, back, left, right, top, and bottom. Accordingly, the first space 35 surrounding the refrigerant pipe 15 is a type of "chamber". The first space 35, however, is unsealed and open. Therefore, the first space 35 can be defined as a "sound field space" or a "sound field space". In the following, the first space 35 is also referred to as an "acoustic space". The acoustic space is considered as a space in which well-known "standing waves" are present in the vertical direction, the right-left direction, and the front-rear direction.

As the "standing waves" are present in the acoustic space, compressional waves are strengthened and weakened by amplification and attenuation at specific frequencies that can be calculated from the "standing waves" present in the acoustic space in the first space 35. In other words, a phenomenon that is referred to as a resonance phenomenon occurs in the first space 35.

Further, in some cases, resonance corresponding to a dimension of the first space 35 occurs because of a columnar resonance phenomenon inside the refrigerant pipe 15, and resonance sound in which a sound pressure level of a characteristic frequency component is increased is thus caused in the first space 35.

The sound pressure level of the noise originally present in the first space 35 and, in some cases, the sound pressure level of the noise transmitted to the outside of the refrigerant pipe 15 by the columnar resonance phenomenon are amplified by the resonance phenomenon in the first space 35. Further, the noise having the amplified sound pressure level is radiated from the first space 35 to the outside of the housing 70. The noise becomes unpleasant noise that is released to a person. In other words, the transmitted noise from the refrigerant pipe 15 and the noise directly radiated from the first space 35 to the outside are essentially extremely small; however, the pressure levels of the noises are amplified because of coincidence with the resonance frequency of the first space 35.

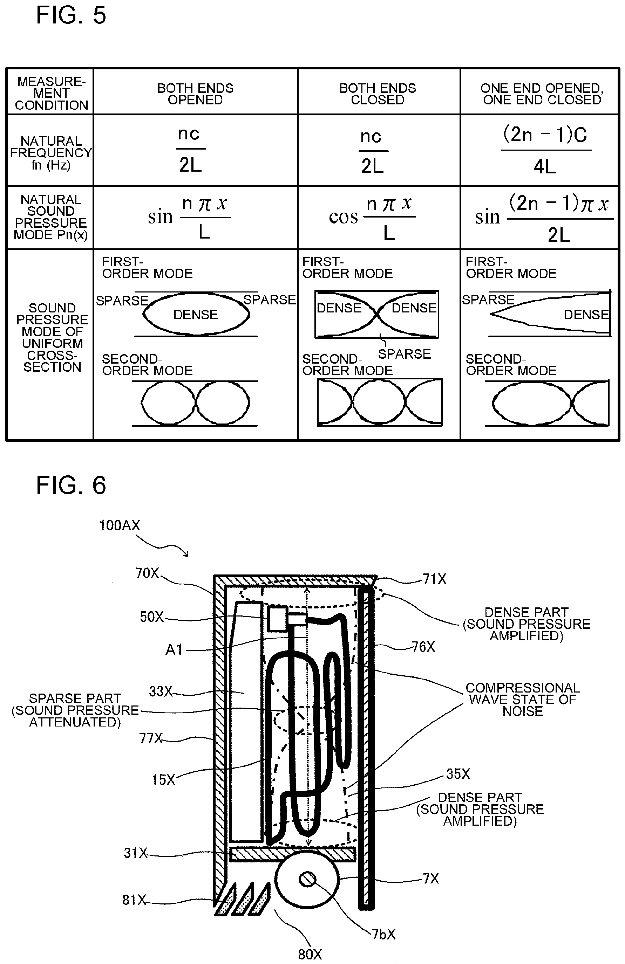

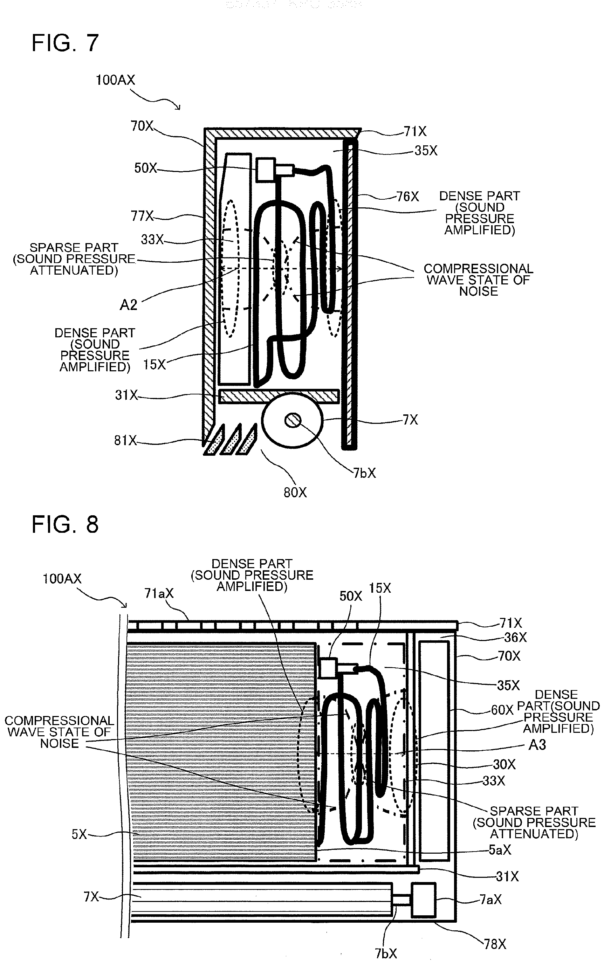

Fig. 5 is an explanatory diagram to explain "standing waves" present in an acoustic space. Fig. 6 is an explanatory diagram to explain "standing waves in vertical direction" present in an acoustic space defined in a housing of a common load side unit. Fig. 7 is an explanatory diagram to explain "standing waves in front-rear direction" present in the acoustic space defined in the housing of the common load side unit. Fig. 8 is an explanatory diagram to explain "standing waves in right-left direction" present in the acoustic space defined in the housing of the common load side unit. The "standing waves" are described with reference to Fig. 5 to Fig. 8. Note that a table illustrated in Fig. 5 is quoted from SHIRAKI Kazuhiro, "Anti-noise design and simulation", Ohyogijyutsu Publication. Further, in Fig. 6 to Fig. 8, "X" is added at the end of each of reference signs of components corresponding to the components of the load side unit 100A, in distinction from the components of the load side unit 100A.

A load side unit 100AX includes a housing 70X that forms an outer shell, as with the load side unit 100A. A front surface of the housing 70X includes a front panel 77X. A top surface of the housing 70X includes a top panel 71X. A rear surface of the housing 70X includes a base 76X. Side surfaces of the housing 70X each include a side panel. A bottom surface of the housing 70X includes a bottom panel 78X.

A wind direction adjusting unit 81X that adjusts a direction of air blown out from an air outlet 80X in vertical and right directions is disposed at the air outlet 80X.

As with the housing 70, an inside of the housing 70X is partitioned by a first partition plate 30X and a second partition plate 31X. In the internal space of the housing 70X partitioned by the first partition plate 30X and the second partition plate 31X, a space in which a second heat exchanger 5X, a LEV 50X, and a refrigerant pipe 15X are accommodated is referred to as a first space 35X. Further, in the internal space of the housing 70X partitioned by the first partition plate 30X and the second partition plate 31X, a space in which a controller 60X is accommodated is referred to as a second space 36X.

A second air-sending device 7X is installed in a lower space partitioned by the second partition plate 31. Further, a motor 7aX that drives the second air-sending device 7X and a shaft 7bX that transmits rotation of the motor 7aX to the second air-sending device 7X are installed together.

Further, a side surface part 5aX of the second heat exchanger 5X includes a metal part to cover a side surface of the second heat exchanger 5X.

Furthermore, a drain cover 33X is provided between the front surface and the refrigerant pipe 15X.

The "standing waves" are generated in a case where surfaces facing each other are present in a space referred to as an acoustic space. It is found from Fig. 5 that the standing waves are present and the resonance phenomenon occurs in any of three conditions where both ends are closed, the both ends are opened, and one of the ends is closed and the other end is opened.

Taking measures against the resonance phenomenon reduces sound pressure amplification by the resonance in the sound field space, and it is thus possible to prevent the noise from radiating to outside of a product.

The front and rear surfaces of the housing 70X of the load side unit 100AX are formed by structure surfaces each made of a resin or other similar material, having relatively large thickness. More specifically, the front surface of the housing includes the drain cover 33X, and the rear surface of the housing includes the base 76X or a rear panel. Therefore, it is possible to prevent the noise from transmitting to the outside of the housing 70X. However, transitional noise other than the refrigerant noise, for example, stick-slip noise that is an abnormal-noise component generated between contacting parts may be transmitted as leakage noise to the outside of the housing 70X.

As illustrated in Fig. 6, the "standing waves in vertical direction" that are compressional waves are present in the first space 35X defined in the housing 70X of the load side unit 100AX (arrow A1). The "standing waves in vertical direction" are dense in the vicinities of the top panel 71X and the second partition plate 31X, and the sound pressure is amplified. Further, the "standing waves in vertical direction" are sparse at an intermediate part in the vertical direction of the first space 35X, and the sound pressure is attenuated. Accordingly, the sound pressure of the refrigerant noise is amplified in the vicinities of the top panel 71X of the housing 70X and the second partition plate 31X, and the refrigerant noise is transmitted to the outside of the housing 70X.

Further, as illustrated in Fig. 7, the "standing waves in front-rear direction" that are compressional waves are present in the first space 35X defined in the housing 70X of the load side unit 100AX (arrow A2). The "standing waves in front-rear direction" are dense in the vicinities of the front panel 77X and the base 76X, and the sound pressure is amplified. Further, the "standing waves in front-rear direction" are sparse at an intermediate part in the front-rear direction of the first space 35X, and the sound pressure is attenuated. As described above, however, the transmission of the noise to the outside of the housing 70X through the front surface and the rear surface of the housing 70X can be prevented. As the front panel 77X is openable, however, possibility that the noise is transmitted to the outside of the housing 70X cannot be denied.

Moreover, as illustrated in Fig. 8, the "standing waves in right-left direction" that are compressional waves are present in the first space 35X defined in the housing 70X of the load side unit 100AX (arrow A3). The "standing waves in right-left and vertical directions" are dense in the vicinities of the side surface part 5aX of the second heat exchanger 5X and the first partition plate 30X, and the sound pressure is amplified. Further, the "standing waves in right-left direction" are sparse at an intermediate part in the right-left direction of the first space 35X, and the sound pressure is attenuated. Accordingly, the sound pressure of the refrigerant noise is amplified in the vicinities of the side surface part 5aX of the second heat exchanger 5X and the first partition plate 30X in the housing 70X, and the refrigerant noise is transmitted to the outside of the housing 70X.

As measures, in the load side unit 100A, a sound absorber is attached to at least one of the surfaces facing each other in the vertical direction in the sound field space and to at least one of the surfaces facing each other in the right-left direction in the acoustic space. Further, the sound absorber is attached to a part corresponding to an "antinode" of the noise at which the compressional waves of the noise are amplified, to attenuate the resonance phenomenon occurring in the first space 35, and the sound pressure amplification of the noise transmitted to the outside from the refrigerant pipe 15 is thus reduced. As a result, a reflection state and a propagation state of the noise in the first space 35 as an acoustic space are changed, and it is thus possible to prevent occurrence of the sound resonance phenomenon.

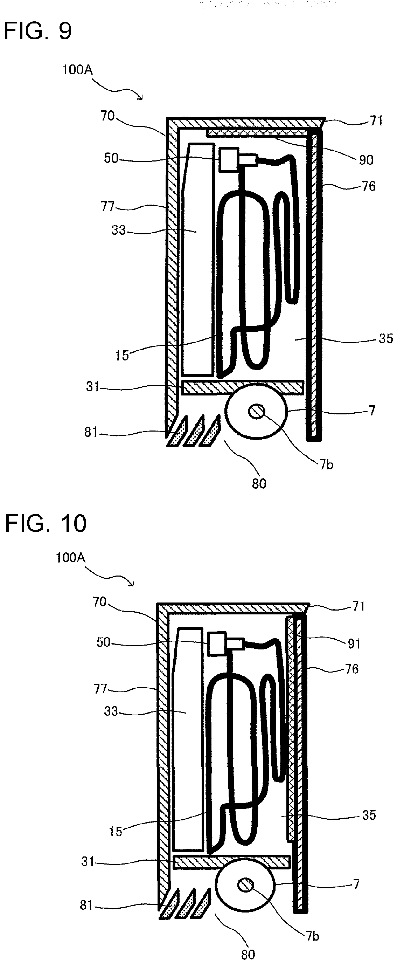

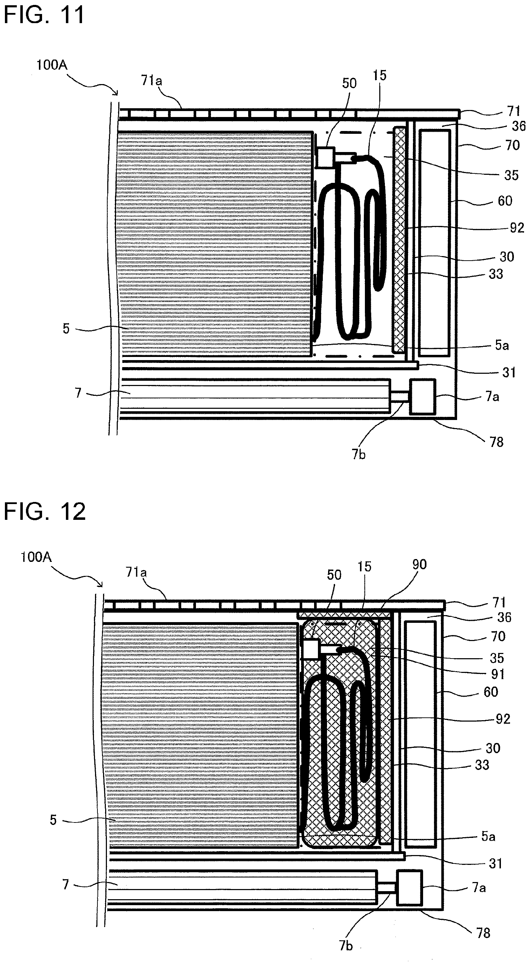

Fig. 9 is a schematic cross-sectional view schematically illustrating a configuration example of the load side unit 100A that includes a sound absorber 90 at an upper part of the first space 35, as viewed from a side. Fig. 10 is a schematic cross-sectional view schematically illustrating the configuration example of the load side unit 100A that includes a sound absorber 91 at a rear surface part of the first space 35, as viewed from a side. Fig. 11 is a schematic configuration diagram schematically illustrating the configuration example of the load side unit 100A that includes a sound absorber 92 at a side surface part of the first space 35, as viewed from a front. Fig. 12 is a schematic configuration diagram schematically illustrating a state where the configuration examples of Fig. 9 to Fig. 12 are combined. The measures against the "standing waves" of the load side unit 100A are described with reference to Fig. 9 to Fig. 12.

Fig. 11 and Fig. 12 each illustrate an inside of the load side unit 100A with the front panel 77 removed from the load side unit 100A. Further, Fig. 3 illustrates the state viewed through the drain cover 33 in such a manner that the LEV 50 and the refrigerant pipe 15 are visually recognizable.

As illustrated in Fig. 9, it is possible to take the measures against the standing waves generated between the top panel 71 and the second partition plate 31 by disposing the sound absorber 90 at the upper part of the first space 35, namely, at a part of a lower surface of the top panel 71. In other words, the sound absorber 90 is disposed on the lower surface of the top panel 71 that corresponds to the "antinode" of the noise at which the compressional waves of the noise are amplified. As a result, the sound absorber 90 can absorb the refrigerant noise radiated to the first space 35 before the refrigerant noise repeats reflection in the vertical direction. This noise absorbent makes it possible to prevent generation of the "standing waves in vertical direction" in the first space 35.

The case where the sound absorber 90 is disposed on the top panel 71 is described as an example; however, the sound absorber 90 may be disposed on the second partition plate 31. Alternatively, the sound absorber 90 may be disposed on each of the top panel 71 and the second partition plate 31. In other words, attaching the sound absorber 90 on at least one of the surfaces facing each other of the first space 35, namely, at least one of the top panel 71 and the second partition plate 31 makes it possible to prevent the resonance phenomenon in the first space 35.

Further, depending on the refrigerant condition, there is a case where the sound pressure is amplified inside the refrigerant pipe 15 by the columnar resonance of the refrigerant pipe 15, and the refrigerant noise amplified inside the refrigerant pipe 15 is transmitted to the outside of the refrigerant pipe 15, with the coincidence phenomenon. As additional measures, a sound absorber may be disposed at a position where occurrence of the columnar resonance is anticipated, to effectively attenuate the refrigerant noise. The position where the occurrence of the columnar resonance is anticipated is determined by the pipe length of the refrigerant pipe 15.

Further, as illustrated in Fig. 10, it is possible to take the measures against the standing waves generated between the drain cover 33 and the base 76 by disposing the sound absorber 91 at the rear surface part of the first space 35, namely, at a part of the side surface of the base 76. In other words, when the sound absorber 91 is disposed, the sound absorber 91 can absorb the refrigerant noise radiated to the first space 35 before the refrigerant noise repeats reflection in the front-rear direction. This noise absorbent makes it possible to prevent generation of the "standing waves in front-rear direction" in the first space 35. Further, disposing the sound absorber 91 can be used as the measures against sudden noise.

The case where the sound absorber 91 is disposed on the base 76 is described as an example; however, the sound absorber 90 may be disposed on the drain cover 33. Alternatively, the sound absorber 91 may be disposed on each of the base 76 and the drain cover 33. In other words, attaching the sound absorber 91 on at least one of the surfaces facing each other of the first space 35, namely, at least one of the base 76 and the drain cover 33 makes it possible to prevent the resonance phenomenon in the first space 35.

Further, a sound absorber may be disposed at a position where occurrence of the columnar resonance is anticipated, to effectively attenuate the refrigerant noise. The position where the occurrence of the columnar resonance is anticipated is determined by the pipe length of the refrigerant pipe 15.

Further, as illustrated in Fig. 11, it is possible to take the measures against the standing waves generated between the side surface part 5a of the second heat exchanger 5 and the first partition plate 30 by disposing the sound absorber 92 at the side surface part of the first space 35, namely, at a part of the side surface of the first partition plate 30. In other words, when the sound absorber 92 is disposed, the sound absorber 92 can absorb the refrigerant noise radiated to the first space 35 before the refrigerant noise repeats reflection in the right-left direction. This noise absorbent makes it possible to prevent generation of the "standing waves in right-left direction" in the first space 35.

The case where the sound absorber 92 is disposed on the first partition plate 30 is described as an example; however, the sound absorber 92 may be disposed on the side surface part 5a of the second heat exchanger 5. Alternatively, the sound absorber 92 may be disposed on each of the first partition plate 30 and the side surface part 5a of the second heat exchanger 5. In other words, attaching the sound absorber 92 on at least one of the surfaces facing each other of the first space 35, namely, at least one of the side surface part 5a of the second heat exchanger 5 and the first partition plate 30 makes it possible to prevent the resonance phenomenon in the first space 35.

Further, a sound absorber may be disposed at a position where occurrence of the columnar resonance is anticipated, to effectively attenuate the refrigerant noise. The position where the occurrence of the columnar resonance is anticipated is determined by the pipe length of the refrigerant pipe 15.

Further, as illustrated in Fig. 12, it is possible to take the measures against the "standing waves" generated in the vertical direction, the front-rear direction, and the right-left direction by disposing the sound absorber 90, the sound absorber 91, and the sound absorber 92.

### <Sound Absorber 90, Sound Absorber 91, and Sound Absorber 92>

Here, the sound absorber 90, the sound absorber 91, and the sound absorber 92 are described. The sound absorbers have been separately described as the sound absorber 90, the sound absorber 91, and the sound absorber 92 that correspond to the disposed positions; however, the sound absorber 90 is described below as a representative example.

The sound absorber 90 includes air chambers, and converts frequency components in the audible band into heat energy to consume the noise components in the audible band. The sound absorber 90 is made of, for example, pulp fibers as a base material. More specifically, the sound absorber 90 can be made of, for example, bioplastic that is obtained by compressing and molding the pulp fibers. Accordingly, as compared with some sound absorber made of glass fibers or other similar material, a risk such as mesothelioma potentially caused by the fibers scattered from the material is avoided.

In the pulp fibers, a plurality of air holes are provided to a cross-section of each of the fibers. The pulp fibers largely include the air chambers as compared with the other fibers, and achieve high sound absorption coefficient. Further, water repellent property may be imparted to the surface of the sound absorber 90. As a result, the sound absorber 90 hardly absorbs moisture generated in the refrigerant pipe 15, and it is thus possible to prevent deterioration of the sound absorbing property. Further, the sound absorber 90 may contain an antifungal material. This antifungal material makes it possible to prevent occurrence of molds or other fungi even when the sound absorber 90 absorbs moisture.

A sound insulator containing a dielectric material that performs thermal conversion of vibration may be stacked on the sound absorber 90. The sound insulator preferably consumes the acoustic energy that is transmitted from the inside to the outside of the refrigerant pipe 15 by performing the thermal conversion of vibration. Such a sound insulator makes it possible to effectively attenuate the frequency components, in particular, in the ultrasonic band, which are higher than the frequency components in the audible band. The sound insulator can be made by kneading the dielectric material such as carbon into a polyester resin or other similar material.

Further, for example, a material having piezoelectric property may be kneaded into the sound insulator. Such a sound insulator can perform thermal conversion of friction heat. In other words, when the acoustic energy enters the sound insulator, the sound insulator consumes, by frictional heat energy conversion, vibration energy at a molecular level in the material derived from pressure variation of the air, and an effect is thus achieved to the acoustic energy of the ultrasonic band having the strong sound pressure level.

Note that the size, the shape, and the thickness of the sound absorber 90 are not particularly limited, and are determined depending on the size and the shape of the first space 35 in which the sound absorber 90 is disposed. However, the thickness of the sound absorber 90 is preferably lower than or equal to 20 mm.

Further, the sound insulator may be stacked on each of the sound absorber 91 and the sound absorber 92, and may be stacked on a sound absorber 96 described in the following modification.

Disposing the sound absorber 90, the sound absorber 91, and the sound absorber 92 in the first space 35 makes it possible to take the measures against the "standing waves" in the first space 35, which is the sound field space. In other words, even when the noise transmitted from the refrigerant pipe 15 is present, the transmitted noise is absorbed by the sound absorber 90, the sound absorber 91, and the sound absorber 92. As a result, the transmitted noise is not reflected by the surfaces defining the first space 35, and the resonance phenomenon does not occur in the first space 35. Accordingly, the noise does not leak to the outside of the housing 70.

Further, as the sound absorber 90, the sound absorber 91, and the sound absorber 92 are disposed on the surfaces defining the first space 35, it is unnecessary to dispose a sound absorber to the drain and passage compartments on which water from the refrigerant pipe 15 or other water flows. Accordingly, molds generated by moisture have less influence, and deterioration of the sound absorbers can be reduced. Further, as influence by the molds is small, it is possible to maintain the first space 35 sanitarily.

Further, it is unnecessary to attach a dedicated cover that covers the whole of the refrigerant pipe 15 to enclose the noise inside the dedicated cover, or to provide an additional part to prevent the noise from transmitting from the dedicated cover. In other words, with the configuration of the load side unit 100A, the number of parts as the measures against noise can be reduced, and the measures against the noise that leaks to the outside of the housing 70 can be achieved at low cost.

### <Modification>

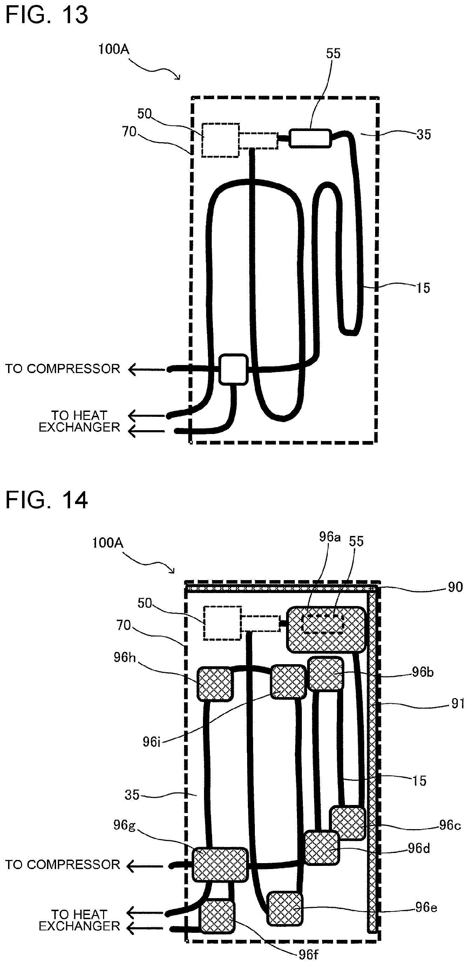

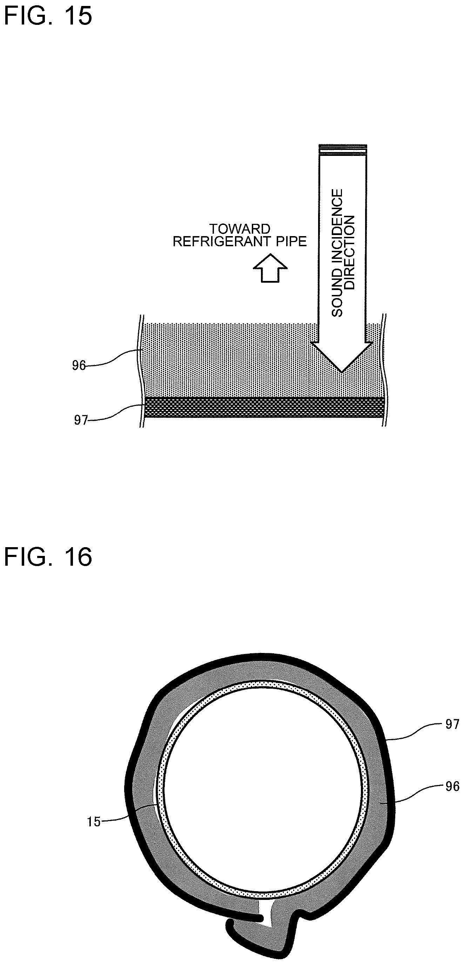

Fig. 13 is a schematic layout diagram schematically illustrating a layout example of the refrigerant pipe 15 inside the housing 70 of the load side unit 100A. Fig. 14 is a schematic configuration diagram schematically illustrating a modification of the load side unit 100A. Fig. 15 is an explanatory diagram to explain action in a case where a sound insulator 97 is stacked on the sound absorber 96 and the stacked body is disposed on the refrigerant pipe 15. Fig. 16 is a schematic cross-sectional view schematically illustrating a cross-sectional configuration in the case where the sound insulator 97 is stacked on the sound absorber 96 and the stacked body is disposed on the refrigerant pipe 15. The modification of the load side unit 100A is described with reference to Fig. 13 to Fig. 16.

As illustrated in Fig. 13, the refrigerant pipe 15 is accommodated in the housing 70 and bent at a plurality of positions. Further, as illustrated in Fig. 13, an intermediate component 55 such as a strainer is often disposed on the refrigerant pipe 15. Pressure is easily applied to bent parts of the refrigerant pipe 15, the intermediate component 55, and other similar part, and sound amplification caused by pressure increase easily occurs at such parts.

For such a reason, as illustrated in Fig. 14, at least one of the intermediate component 55 and the bent parts of the refrigerant pipe 15 is covered with a sound absorber, and it is thus possible to attenuate unnecessary noise radiation. Fig. 14 illustrates a case where all of the intermediate component 55 and the bent parts of the refrigerant pipe 15 are covered with sound absorbers 96a to 96i, as an example. Further, Fig. 14 also illustrates the sound absorber 90 and the sound absorber 91. Furthermore, in a case where it is unnecessary to separately describe the sound absorbers 96a to 96i, the sound absorbers 96a to 96i are correctively referred to as sound absorbers 96.

The columnar resonance occurs also inside the refrigerant pipe 15. The "dense" part of the noise by the columnar resonance inside the refrigerant pipe 15 and the "coincidence phenomenon" that is a transmission phenomenon by the pipe material are brought together to enhance the sound pressure level at an optional position of the refrigerant pipe 15, and transmitted noise is accordingly generated. For such a reason, as illustrated in Fig. 14, as the noise is amplified at the intermediate component 55 provided in the middle of the refrigerant pipe 15, the bent parts of the refrigerant pipe, and other similar part, and the sound absorbers 96 are provided at such positions.

In a case where a sound insulator is stacked on each of the sound absorbers 96, the sound absorbers 96 are provided at the installation objective parts, and the sound insulator is provided on the outside of each of the sound absorbers 96a to 96i. In other words, as illustrated in Fig. 15 and Fig. 16, each of the sound absorbers 96 and corresponding sound insulator 97 are stacked to form two-layer structure. This configuration makes it possible to surely attenuate acoustic energy components transmitted to the outside of the refrigerant pipe 15. This configuration is used as the measures against all of the generated refrigerant flow noise, and it is thus possible to reduce annoyance of an inhabitant caused by unpleasant noise.

Further, as illustrated in Fig. 16, the sound absorbers 96 and the sound insulators 97 are disposed to cover the entire circumference of the refrigerant pipe 15. This configuration makes it possible to reduce noise radiation causing sound propagation to the outside from the entire circumference of the refrigerant pipe 15. Note that it is unnecessary to bond the sound absorbers 96 to an outer peripheral surface of the refrigerant pipe 15, and a gap may be present between surfaces of the sound absorbers 96 that face the pipe and the outer peripheral surface of the refrigerant pipe 15. The gap makes it possible to further improve the sound absorbing effect. Further, even in a case where the sound insulators 97 are not provided, the sound absorbers 96 are preferably disposed to cover the entire circumference of the refrigerant pipe 15.

Note that, in the gas-phase state, passing noise when the refrigerant passes through an extremely narrow space such as the LEV 50 is basically generated. The components in the ultrasonic band are hardly generated in any of the phases, and the components in the audible band are mainly generated. Further, the generated noise includes sliding noise between the refrigerant pipe 15 and the refrigerant. The sliding noise contains vibration components. Therefore, it is not possible to reduce the frequency components transmitted from the refrigerant pipe 15 and propagating to the outside of the refrigerant pipe 15 only by the vibration measures. It is necessary for the noise that has once transmitted through the refrigerant pipe 15 to the outside to be subjected to any outside processing for energy conversion processing. To effectively perform the thermal conversion, a noise radiation source is preferably covered with a material including air chambers. Therefore, the periphery of the refrigerant pipe 15 directly connected to the LEV 50 is preferably covered with a combination of the sound absorber and the sound insulator to effectively reduce the noise radiation.

As described above, the unit for a refrigeration cycle device according to one embodiment of the present disclosure includes the housing 70 that internally includes the sound field space surrounded by the surfaces reflecting the sound waves, the LEV 50 that is disposed in the sound field space, and the sound absorber provided on at least a part of the surfaces defining the sound field space. Therefore, with the configuration of the load side unit 100A, it is possible to effectively attenuate the amplified noise generated in the sound field space only by providing the sound absorber on the surface of the first space 35, which is the sound field space.

Note that the sound absorber is at least one of the sound absorber 90, the sound absorber 91, and the sound absorber 92.

Therefore, in the unit for a refrigeration cycle device according to one embodiment of the present disclosure, the noise measures by the effective sound field control are achievable only by specifying the locations of the sound absorbers each made of few materials. Further, in the unit for a refrigeration cycle device according to one embodiment of the present disclosure, it is unnecessary to cover the whole of the refrigerant pipe 15 with a damping material, and it is thus possible to reduce labor and cost for the damping material. Furthermore, in the unit for a refrigeration cycle device according to one embodiment of the present disclosure, as it is unnecessary to dispose the sound absorber to the drain and passage compartments on which water from the refrigerant pipe 15 and other water flows, molds generated by moisture have less influence, and deterioration of the sound absorbers can be reduced.

In the unit for a refrigeration cycle device according to one embodiment of the present disclosure, the expansion device is the LEV 50. Therefore, it is possible to take the measures against the transmitted noise that is transmitted from the inside to the outside of the refrigerant pipe 15 connected to the LEV 50.

In the unit for a refrigeration cycle device according to one embodiment of the present disclosure, the sound absorber is made of the pulp fibers including air chambers. Therefore, it is possible to take the measures against both of the transmitted noise of the audible band and the transmitted noise of the ultrasonic band, and a risk such as mesothelioma potentially caused by the fibers scattered from the material is avoided.

Note that the sound absorber is at least one of the sound absorber 90, the sound absorber 91, and the sound absorber 92.

In the unit for a refrigeration cycle device according to one embodiment of the present disclosure, the sound absorbers 96 are further provided at the bent parts of the refrigerant pipe 15 and the intermediate component 55. Therefore, it is possible to attenuate the unnecessary noise radiation at positions where sound amplification by pressure increase easily occurs.

In the unit for a refrigeration cycle device according to one embodiment of the present disclosure, the sound insulator 97 containing the dielectric material is stacked on the sound absorber. Therefore, it is possible to surely attenuate the acoustic energy components transmitted to the outside of the refrigerant pipe 15. Accordingly, in the unit for a refrigeration cycle device according to one embodiment of the present disclosure, it is possible to take the measures against all of the generated refrigerant flow noise, and to reduce annoyance of an inhabitant caused by unpleasant noise.

Note that the sound absorber is at least one of the sound absorber 90, the sound absorber 91, the sound absorber 92, and the sound absorbers 96.

The refrigeration cycle device according to one embodiment of the present disclosure includes the above-described unit for a refrigeration cycle device. Therefore, it is possible to effectively attenuate the amplified noise generated in the sound field space of the unit for a refrigeration cycle device.

As one of the units for a refrigeration cycle device according to one embodiment of the present disclosure, the load side unit 100A has been described as a representative example. The described contents are similarly applicable to the heat source side unit 100B. Therefore, when the refrigeration cycle device according to one embodiment of the present disclosure includes the heat source side unit 100B that is subjected to the noise measures described for the load side unit 100A, it is possible to effectively attenuate amplified noise generated in a sound field space of the heat source side unit 100B.

The electric apparatus according to one embodiment of the present disclosure includes the above-described refrigeration cycle device. Therefore, it is possible to take the measures against unpleasant noise generated from an electric apparatus familiar to an inhabitant, and to reduce annoyance of the inhabitant.

Examples of the electric apparatus include an air-conditioning apparatus, a water heater, a freezer, a dehumidifier, and a refrigerator.

### Reference Signs List

1 compressor 2 flow switching device 3 first heat exchanger 5 second heat exchanger 5X second heat exchanger 5a side surface part 5aX side surface part 6 first air-sending device 7 second air-sending device 7X second air-sending device 7a motor 7aX motor 7b shaft 7bX shaft 15 refrigerant pipe 15X refrigerant pipe 30 first partition plate 30X first partition plate 31 second partition plate 31X second partition plate 33 drain cover 33X drain cover 35 first space 35X first space 36 second space 36X second space 55 intermediate component 60 controller 60X controller 70 housing70X housing 71 top panel 71X top panel 71a opening port 76 base 76X base 77 front panel 77X front panel 78 bottom panel 78X bottom panel 80 air outlet 80X air outlet 81 wind direction adjusting unit 81X wind direction adjusting unit 90 sound absorber 91 sound absorber 92 sound absorber 96 sound absorber 96a sound absorber 96b sound absorber 96c sound absorber 96d sound absorber 96e sound absorber 96f sound absorber 96g sound absorber 96h sound absorber 96i sound absorber 97 sound insulator 100 refrigeration cycle device 100A load side unit 100AX load side unit 100B heat source side unit

## Claims

1. A unit for a refrigeration cycle device, the unit comprising:
a housing that internally includes a sound field space surrounded by surfaces each reflecting sound waves;
an expansion device disposed in the sound field space and configured to adjust a flow rate of refrigerant;
a refrigerant pipe disposed in the sound field space and connected to the expansion device; and
a sound absorber disposed on at least a part of the surfaces defining the sound field space.

2. The unit for a refrigeration cycle device of claim 1, wherein the expansion device is an electronic expansion valve.

3. The unit for a refrigeration cycle device of claim 1 or 2, wherein the sound absorber is made of pulp fibers including air chambers.

4. The unit for a refrigeration cycle device of any one of claims 1 to 3, wherein the sound absorber is further provided to a bent part of the refrigerant pipe and an intermediate component provided to the refrigerant pipe.

5. The unit for a refrigeration cycle device of any one of claims 1 to 4, wherein a sound insulator containing a dielectric material is stacked on the sound absorber.

6. A refrigeration cycle device, comprising
the unit for a refrigeration cycle device of any one of claims 1 to 5, as at least one of a heat source side unit and a load side unit.

7. An electric apparatus, comprising
the refrigeration cycle device of claim 6.
